# EUROPÄISCHE PATENTSCHRIFT

(11) **EP 1 887 128 B1**
(45) Veröffentlichungstag und Bekanntmachung des Hinweises auf die Patenterteilung: **14.10.2009**
(21) Anmeldenummer: 06016612.1
(22) Anmeldetag: 09.08.2006
(51) Int. Cl.: D06N 3/14, D06N 3/00, B32B 27/12

(54) **Verfahren zur Herstellung eines atmungsaktiven mehrschichtigen Kunstleders sowie atmungsaktives mehrschichtiges Kunstleder**
Process for the production of breathable layered artificial leather and breathable layered artificial leather
Procede de fabrication d'un cuir artificiel laminé perméable à l'air et cuir artificiel perméable à l'air

(43) Veröffentlichungstag der Anmeldung: 13.02.2008
(73) Patentinhaber: Konrad Hornschuch AG, 74679 Weissbach (DE)
(72) Erfinder: Fischer, Bernd, 71711 Murr (DE); Wetzel, Marcus, 72581 Dettingen (DE); Kammerer, Birgit, 74635 Kupferzell (DE); Kaspar, Sonja, 74238 Krautheim-Neunstetten (DE)
(74) Vertreter: Müller-Gerbes Wagner Albiger Patentanwälte

(56) Entgegenhaltungen:
- EP-A2- 1 279 762
- WO-A-20/04061198
- WO-A-20/05047549
- GB-A- 1 171 932
- US-A- 3 751 329

## Beschreibung

Die Erfindung betrifft ein Verfahren zur Herstellung eines atmungsaktiven mehrschichtigen Kunstleders mit einer Trägerschicht aus einem textilen Flächengebilde, mindestens einer auf die Trägerschicht aufgebrachten Zwischenschicht auf Basis eines zumindest teilweise offenzelligen Polyurethan-Schlagschaumes sowie einer auf die mindestens eine Zwischenschicht aufgebrachten Deckschicht auf Basis eines Polyurethans, wobei in einem ersten Schritt die Deckschicht auf eine ablösbare Unterlage aufgebracht und verfestigt wird, nachfolgend die mindestens eine Zwischenschicht auf die Deckschicht aufgebracht und anschließend die Trägerschicht auf die mindestens eine Zwischenschicht aufgelegt wird und die Unterlage von der Deckschicht gelöst wird.

Derartige Verfahren zur Herstellung von Kunstledern sind z.B. aus der DD 259 106 A3 bekannt und zeichnen sich dadurch aus, dass der Schichtenaufbau im so genannten Umkehrverfahren erfolgt, d.h. es wird zunächst die spätere Sichtseite, d.h. Oberseite der Deckschicht an der Auflagefläche der Unterlage ausgebildet und anschließend werden die weiteren Schichten aufgebracht, bis letztlich die Trägerschicht aufgebracht wird, die am fertigen Kunstleder später die Unterseite bildet. Nachdem der vollständige Schichtenaufbau ausgebildet ist, wird die Unterlage von der Deckschicht gelöst, so dass die Sichtseite zugänglich wird, das erstellte Kunstleder wird gewendet und anschließend kann die Deckschicht mit einer Prägung oder sonstigen weiteren Oberflächenbearbeiting versehen werden.

Atmungsaktive mehrschichtige Kunstleder eignen sich insbesondere für die Verwendung im Kfz-Innenbereich, beispielsweise als Sitzbezug, da durch die atmungsaktive Eigenschaft ein angenehmer Sitzkomfort gewährleistet wird und einem Schwitzen auf einem derartig bezogenen Fahrzeugsitz vorgebeugt wird.

Während die eingesetzten Trägerschichten aus textilem Flächengebilde sowie die für die Zwischenschichten eingesetzten Polyurethanschlagschäume von sich aus eine gewisse Offenporigkeit mit sich bringen, die für die Erzielung der Atmungsaktivität erforderlich ist, gestaltet sich die Ausbildung einer porösen Deckschicht auf Basis eines Polyurethans bislang schwierig, da die im Umkehrverfahren auf einer Unterlage aufgebrachten Polyurethandispersionen üblicherweise bei ihrer Verfestigung zur Ausbildung eines geschlossenen Films neigen, der gerade keine Poren aufweist, so dass in einem weiteren Arbeitsgang, etwa durch Nadelung oder Verstreckung nachträglich Poren in die Deckschicht eingebracht werden müssen. Dies ist jedoch nicht nur aufwendig, sondern beeinflusst auch den optischen Eindruck der Deckschicht, da die durch Nadelung eingebrachten Poren mit bloßem Auge gut sichtbar sind.

Aus der EP 1 279 762 A2 ist die Ausbildung eines atmungsaktiven Kunstleders der eingangs genannten Art bekannt, wobei jedoch die Filmbildung in der Deckschicht eine für die Atmungsaktivität erforderliche Porosität verhindert. Soll das bekannte Kunstleder eine poröse und damit atmungsaktive Deckschicht aufweisen, wird die Deckschicht nicht vollflächig, sondern lediglich in Vertiefungen einer lederartig strukturierten Unterlage eingebracht, so dass zwischen den in den Vertiefungen sich ausbildenden Deckschichtbereichen Öffnungen entstehen. Ein solches Kunstleder weist vielfältige Nachteile, wie z.B. geringe Abriebfestigkeit der Deckschicht auf.

Aus der WO 2005/047549 ist es bekannt, eine Zurichtung aus einer wässrigen Kunststoffdispersion auf eine auf eine Temperatur unter 105°C aufgeheizte strukturierte Unterlage aufzubringen, um nach Wasserverdampfung einen Film zu bilden. Die solchermaßen erstellte Schicht weist zwar einige Poren auf jedoch erscheint die Atmungsaktivität aufgrund der Filmbildung verbesserungswürdig, insbesondere was die Anzahl und Größe der Poren anbelangt.

Es ist daher Aufgabe der vorliegenden Erfindung, ein Verfahren zur Herstellung eines atmungsaktiven mehrschichtigen Kunstleders der eingangs genannten Art vorzuschlagen, welches unter Einsparung zusätzlicher Arbeitsgänge die Herstellung eines atmungsaktiven und von daher mit einer offenporigen Deckschicht ausgebildeten mehrschichtigen Kunstleders ermöglicht, wobei dieses Kunstleder nicht nur besonders rationell hergestellt werden soll, sondern darüber hinaus die ausgebildeten Poren derart klein sind, dass sie den optischen Eindruck des Kunstleders nicht stören.

Zur Lösung dieser gestellten Aufgabe wird erfindungsgemäß die Ausbildung eines Verfahrens zur Herstellung eines atmungsaktiven mehrschichtigen Kunstleders gemäß den Merkmalen des Patentanspruchs 1 vorgeschlagen.

Vorteilhafte Ausgestaltungen und Weiterbildungen des erfindungsgemäßen Verfahrens sind Gegenstand der Unteransprüche.

Der erfindungsgemäße Vorschlag beruht darauf, dass zur Ausbildung der Deckschicht eine wässrige aliphatische Polyurethandispersion als Ausgangsbasis für die Deckschicht in flüssiger Form auf die Unterlage aufgebracht wird und unmittelbar nach dem Aufbringen der Polyurethandispersion der Wassergehalt derselben durch Wärmezufuhr binnen so kurzer Zeit verdampft wird, dass eine verfilmungsfreie Trocknung der Polyurethandispersion auf der Unterlage unter Ausbildung der Deckschicht mit Mikroporen bewirkt wird.

Die im Rahmen der vorliegenden Erfindung gebildeten Mikroporen in der Deckschicht weisen solche Porengrößen auf, dass Wasserdampfdurchlässigkeit gegeben ist, der Eintritt von flüssigem Wasser hingegen verhindert oder zumindest verzögert wird. Porengrößen im Bereich von 10 bis 80 µm lassen sich nach dem erfindungsgemäßen Verfahren ohne weiteres erzeugen, jedoch sind auch größere Porengrößen bzw. -durchmesser erzeugbar.

Erfindungsgemäß wird die zur Ausbildung der mikroporösen Deckschicht verwendete wässrige aliphatische Polyurethandispersion in bekannter Weise auf eine Unterlage mit trennenden Eigenschaften aufgebracht, wobei eine so starke Wärmezufuhr erfolgt, dass die Polyurethandispersion schlagartig getrocknet wird, wodurch die Dispersion am Verfilmen gehindert bzw. ein sich bildender Film sofort zerstört wird.

Während man bisher immer davon ausgegangen ist, eine Verfilmung der Deckschicht sei anzustreben, wobei der gebildete Film sodann anschließend oder während der Filmbildung Poren erhält, geht die Erfindung einen anderen Weg, indem sie durch die schlagartige Trocknung jegliche Filmbildung zu vermeiden sucht. Die wässrige Polyurethandispersion wird mittels geeigneter Aufbringungsverfahren in Form von diskreten Tröpfchen auf die Unterlage aufgebracht, wobei infolge der hohen Temperatur der Unterlage jeder Tropfen unmittelbar eintrocknet und ein Verlaufen benachbarter Tropfen, d.h. die Filmbildung unterbleibt.

Unter schlagartiger Trocknung im Sinne der Erfindung wird eine Trocknung der auf die Unterlage aufgebrachten wässrigen aliphatischen Polyurethandispersion in einem Zeitintervall von weniger als 5 s verstanden; wozu eine Erwärmung derselben innerhalb dieses Intervalls auf etwa 175 bis 200°C als vorteilhaft erachtet wird. Dies kann durch eine entsprechende Beheizung der Unterlage auf mindestens 175°C bewirkt werden. Bei derartigen Temperaturen unterliegt die verwendete Polyurethandispersion noch keiner mechanischen Beeinträchtigung, jedoch erfolgt die Verdampfung des Wassergehaltes derart schnell, dass die gewünschte verfilmungsfreie Trocknung derselben bewirkt wird. Selbstverständlich können je nach eingesetzter wässriger aliphatischer Polyurethandispersion zur Ausbildung der Deckschicht auch höhere oder niedrigere Temperaturen gewählt werden, sofern dies die Temperaturfestigkeit der eingesetzten. Polyurethandispersion zulässt.

Beim Auftrag der wässrigen aliphatischen Polyurethandispersion in flüssiger Form werden die einzelnen Tropfen derselben aufgrund der hohen Wärmezufuhr an ihren jeweiligen Rändern nahezu unmittelbar an der Unterlage durch Verdampfung des Wassergehaltes fixiert, so dass ein Verlaufen und gegenseitiges Verbinden der einzelnen diskreten Tropfen weitgehend bis vollständig verhindert wird. In der Folge bilden sich zwischen den einzelnen Tropfen die gewünschten Mikroporen aus, die für die Erzielung der Atmungsaktivität der solchermaßen hergestellten Deckschicht erforderlich sind. Von daher kann auf einen nachfolgenden Arbeitsgang zur mechanischen Poreneinbringung, wie etwa eine Nadelung oder Verstreckung beim erfindungsgemäßen Verfahren verzichtet werden. Darüber hinaus sind die erzeugten Mikroporen derart klein, dass sie mit bloßem Auge nur schwierig bis gar nicht zu erkennen sind, so dass das nach dem erfindungsgemäßen Verfahren hergestellte atmungsaktive mehrschichtige Kunstleder einen besonders vorteilhaften optischen Eindruck erhält.

Bevorzugt wird zur Ausbildung der Deckschicht eine Polyurethandispersion mit einem Feststoffgehalt von 30 bis 60% verwendet.

Die Aufbringung der wässrigen aliphatischen Polyurethandispersion in flüssiger Form auf die Unterlage, kann gemäß dem erfindungsgemäßen Verfahren in mehreren Varianten erfolgen.

Nach einem Vorschlag der Erfindung wird die Polyurethandispersion zur Ausbildung der Deckschicht mittels Spritzdüsen in feiner Tropfenform auf die Unterlage aufgesprüht, wobei ein derartiger Spritzauftrag sowohl auf einer glatten wie auch einer bereits geprägten Unterlage erfolgen kann.

Für das Aufsprühen der Polyurethandispersion sind die gängigen Spritzverfahren, wie Airless, Airmix, HVLP (High Volume Low Pressure) oder Fließdruck geeignet.

Alternativ kann die Polyurethandispersion zur Ausbildung der Deckschicht auch auf die Unterlage aufgerakelt werden, wobei in diesem Falle die Unterlage möglichst glatt sein sollte, da auf einer geprägten Unterlage sich durch den Rakelauftrag eine ungleichmäßige Schichtdicke (Kuppe/Narbtal) einstellt, die sich negativ auf die Festigkeit auswirkt.

Eine weitere Aufbringungsalternative gemäß der Erfindung besteht darin, dass die Polyurethandispersion zur Ausbildung der Deckschicht auf die Unterlage aufgedruckt wird, wozu sich beispielsweise Raster- oder Siebdruckverfahren eignen. Die Druckverfahren gewährleisten ihrerseits zur Ausbildung der Deckschicht verwendete wässrige Polyurethandispersion in Form feinstverteilter Tropfen auf die Unterlage aufgebracht wird, so dass die schlagartige Trocknung durch starke Wärmezufuhr in der bereits genannten Art zuverlässig erfolgen kann.

Auch ist es möglich, eine dünne Schicht der wässrigen Polyurethandispersion z.B. im RGW-Druckverfahren aufzubringen, in der sich bei der erfindungsgemäßen schlagartigen Trocknung sodann ebenfalls die gewünschten Poren ausbilden.

Die zur Ausbildung der Deckschicht verwendete Unterlage kann bevorzugt bandförmig und ggf. endlos umlaufend ausgebildet sein und wird in diesem Falle weiter bevorzugt über mindestens eine beheizte Walze geführt, um die Unterlage auf eine für die Verdampfung des Wassergehaltes der aufgebrachten Polyurethandispersion geeignete Temperatur zu erwärmen. Die Wärmezufuhr in die aufgebrachte wässrige Polyurethandispersion zur schlagartigen Verdampfung des Wassergehaltes derselben erfolgt von daher über die Aufbringung auf eine zuvor auf geeignete Temperaturen erhitzte Unterlage.

Alternativ oder zusätzlich kann die auf die Unterlage aufgebrachte Polyurethandispersion auch mittels Wärmestrahlung und/oder Mikrowellen zur Verdampfung des Wassergehaltes erhitzt werden, um die verfilmungsfreie Trocknung auf der Unterlage unter Ausbildung der Deckschicht mit Mikroporen zu bewirken.

Hierbei sollte jedoch die Wärmezufuhr ausschließlich von der Unterlage her erfolgen, damit auf der der Unterlage abgewandten Seite der sich bildenden Deckschicht keine Verfilmung eintritt, die sodann die weitere Verdampfung des Wassergehaltes aus der Polyurethandispersion hemmen oder gar verhindern würde.

Eine bandförmige Unterlage gestattet zudem einen zumindest teilkontinuierlichen, bevorzugt aber kontinuierlichen Verfahrensablauf zur Herstellung des erfindungsgemäßen Kunstleders.

Je nach verwendetem Aufbringungsverfahren kann die Deckschicht in einer Dicke von 5 bis 150 µm auf die Unterlage aufgebracht werden.

Die Trockenauflage der Deckschicht liegt im Bereich zwischen 10 bis 50 g/m², vorzugsweise 30 bis 40 g/m².

insbesondere beim Aufsprühen der Polyurethandispersion auf die Unterlage sind Trockenauflagen zwischen 30 und 40 g/m² ideal. Nach dem erfindungsgemäßen Verfahren können aber auch bei Trockenauflagen bis zu 50 g/m² noch ausreichend viele Mikroporen in der Deckschicht erhalten werden.

Die verwendete Unterlage kann beispielsweise eine sich leicht von der gebildeten Deckschicht ablösende Kunststofffolie; ein silikonisiertes textiles Flächengebilde oder ein silikonisiertes Papier oder auch ein metallisches Substrat, wie ein Edelstahlband sein.

Wie bereits erwähnt, kann die Unterlage je nach Anwendungsfall glatt oder auch mit einer Oberflächenprofilierung versehen sein, um der sich ausbildenden Deckschicht auf der Unterlage sogleich eine entsprechende Oberflächenprofilierung zu verleihen, etwa in Form einer gewünschten Ledemarbung.

Zur weiteren Beschleunigung der Verdampfung des Wassergehaltes der aliphatischen Polyurethandispersion können zusätzlich wassermischbare niedrig siedende organische Lösungsmittel in der Polyurethandispersion enthalten sein, um die Verdampfung infolge Wärmezufuhr zu beschleunigen.

Nachdem in der vorangehend geschilderten Weise die Deckschicht durch verfilmungsfreie Trocknung der aufgebrachten Polyurethandispersion auf der Unterlage erzeugt worden ist, wird mindestens eine Zwischenschicht in Form eines offenporigen Polyurethan-Schlagschaumes auf die Deckschicht bzw. im Falle mehrerer Zwischenschichten auf die zuvor aufgebrachte Zwischenschicht aufgebracht, und zwar bevorzugt aufgerakelt. Dafür werden die Basisdispersionen mit Schaumstabilisatoren zur Erzielung eines offenzelligen Schaumes, ggf. Flammschutz und weiteren Additiven gemischt und mit Luft auf das gewünschte Schaumgewicht aufgeschlagen. Das Schaumgewicht beeinflusst hierbei die Luftdurchlässigkeit und mechanische Stabilität.

Aufgrund der Verwendung mindestens einer Schlagschaum-Zwischenschicht wird beim erfindungsgemäßen atmungsaktiven Kunstleder eine weitgehende Unabhängigkeit vom eingesetzten Trägermaterial erreicht, da die Schlagschaum-Zwischenschicht stets gute Verbindung zwischen Trägermaterial und Deckschicht herstellt.

Wenn lediglich eine Zwischenschicht verwendet wird, weist diese bevorzugt ein Schaumgewicht von 200 bis 700 g/l vorzugsweise 300 bis 600 g/l und weiter bevorzugt 400 bis 500 g/l auf und wird in einer. Dicke von 200 bis 1000 µm auf die Deckschicht aufgerakelt.

Werden hingegen zwei Zwischenschichten aufeinander folgend auf die Deckschicht bzw. die erste erstellte Zwischenschicht aufgerakelt, so hat bevorzugt diejenige Zwischenschicht, die direkt auf die Deckschicht aufgerakelt wird, ein höheres Schaumgewicht als die darauf aufgebrachte zweite Zwischenschicht, die auch als Kaschierstrich bezeichnet werden kann.

In einem solchen Falle weisen die beiden Zwischenschichten bevorzugt, aber nicht notwendigerweise gleiche Dicken auf, wobei ein Dickenbereich von 200 bis 800 µm für die Zwischenschichten als sinnvoll erscheint.

Die auf die Deckschicht aufgerakelte erste Zwischenschicht weist sodann bevorzugt ein Schaumgewicht von 300 bis 700 g/l, vorzugsweise 400 bis 600 g/l und die zweite Zwischenschicht als Kaschierstrich ein Schaumgewicht von 200 bis 600 g/l, vorzugsweise 300 bis 500 g/l auf.

Zur Erzielung einer ausreichenden Offenporigkeit werden in den einzelnen Zwischenschichten bevorzugt durchschnittliche Porengrößen von 100 bis 200 µm erzeugt.

Insbesondere bei Verwendung einer glatten Unterlage und einer anschließenden Prägung des erhaltenen mehrschichtigen Kunstleders ist eine ausreichende Festigkeit des für die Zwischenschicht verwendeten Schlagschaumes unter Prägebedingungen erforderlich. Es ist von daher bei der Trocknung der Zwischenschicht darauf zu achten, dass keine Spannungsrisse an der Oberfläche entstehen, was üblicherweise durch Trocknung in einem Kanal mit mehreren, getrennt einstellbaren Temperaturzonen in an sich bekannter Weise erfolgt.

Eine weitere Steigerung der Stabilität der verwendeten Zwischenschichten kann dadurch erzielt werden, dass diese durch Zusatz von beispielsweise Isocyanat oder Melamin vernetzt werden oder aber durch Zusatz von funktionalen Füllstoffen, wie mineralischen Füllstoffen oder faserförmigen Füllstoffen oder Kunststoffpulvern, wie PE.

Die im Rahmen des erfindungsgemäßen Verfahrens eingesetzte Trägerschicht kann vom Fachmann in weiten Grenzen ausgewählt werden und beispielsweise ein Gelege, Gewebe, Gewirke, Vlies oder Kombination derselben sein; auch Mikrofaservliese, Abstandsgewirke/-vliese oder Vliese mit eingenadeltem Trikot kommen infrage. Das verwendete textile Flächengebilde kann darüber hinaus auch imprägniert sein, um die Verbindung mit der Zwischenschicht zu verbessern, beispielsweise mittels Polyurethan. Es kann auch Leder, z.B. Spaltleder erfindungsgemäß mit der mindestens einen Zwischenschicht und der Deckschicht beschichtet werden.

In jedem Falle ist es bevorzugt, dass die Trägerschicht nach der Erstellung der mindestens einen Zwischenschicht auf die zuoberst zum Liegen kommende Zwischenschicht zu einem Zeitpunkt aufgelegt wird, zu dem diese Zwischenschicht noch nicht vollständig abgetrocknet ist, so dass die Trägerschicht zumindest teilweise in die Zwischenschicht einsinkt und in dieser eingebettet wird. Hierbei ist jedoch darauf zu achten, dass die Trägerschicht nicht zu tief in die Zwischenschicht einsackt, was über die Viskosität des verwendeten Schlagschaumes für die Zwischenschicht, den Kaschierdruck und die Trocknungsbedingungen gesteuert werden kann.

Auf die Oberfläche der erstellten Deckschicht des mehrschichtigen atmungsaktiven Kunstleders kann nach Ablösen der Unterlage ein Lack aufgebracht werden, der sowohl die mechanischen Eigenschaften, wie z.B. die Kratzfestigkeit verbessern wie auch gewünschte Anforderungen an die Haptik verbessern kann. Zur Aufbringung kann beispielsweise eine Rasterwalze verwendet werden.

Wie bereits erwähnt, kann wahlweise nach Ablösen der Unterlage die Oberfläche des erstellten mehrschichtigen atmungsaktiven Kunstleders geprägt werden, beispielsweise mit einer Ledemarbung, wozu sich das Vakuumprägen besonders anbietet, da durch den geringen Prägedruck und die längere Kontaktzeit der Oberfläche mit der Prägewalze die Schaumstruktur besser erhalten bleibt und sich durch den Unterdruck Poren zusätzlich öffnen und Kapillaren ausbilden, was der Atmungsaktivität des hergestellten Kunstleders zugute kommt. Darüber hinaus kann durch Verwendung eines besonders scharfkantigen Prägeprofils eine zusätzliche Öffnung von Poren und Kapillaren erzielt werden. Das Prägen des erstellten Kunstleders bietet darüber hinaus den Vorteil, dass keine nachfolgenden Arbeitsschritte mehr das Prägeergebnis verschlechtern können, wie es z.B. bei Verwendung einer geprägten Unterlage und anschließendem Schichtenauftrag der Fall sein kann.

Die Erfindung betrifft ferner auch ein mehrschichtiges atmungsaktives Kunstleder mit einer Trägerschicht aus einem textilen Flächengebilde, mindestens einer auf die Trägerschicht aufgebrachten Zwischenschicht auf Basis eines zumindest teilweise offenzelligen Polyurethan-Schlagschaumes sowie einer auf die mindestens eine Zwischenschicht aufgebrachten Deckschicht auf Basis eines Polyurethans.

Zur Lösung der eingangs gestellten Aufgabe einer besonders wirtschaftlichen Herstellung mit guter Atmungsaktivitäfi bei gleichzeitig vorteilhaftem optischen Eindruck weist das erfindungsgemäß vorgeschlagene mehrschichtige atmungsaktive Kunstleder eine Deckschicht auf, die infolge verfilmungsfreier Trocknung einer wässrigen aliphatischen Polyurethandispersion mit Mikroporen ausgebildet ist.

Die Deckschicht eines derartigen mehrschichtigen atmungsaktiven Kunstleders weist bevorzugt eine Dicke von 5 bis 150 µm auf und besitzt eine Trockenauflage von 10 bis 50 g/m², vorzugsweise 30 bis 40 g/m².

Weitere Einzelheiten des mehrschichtigen atmungsaktiven Kunstleders sind Gegenstand der weiteren Unteransprüche.

Das erfindungsgemäße Verfahren und das solchermaßen hergestellte mehrschichtige atmungsaktive Kunstleder werden nachfolgend in weiteren Einzelheiten anhand von Ausführungsbeispielen unter Hinzuziehung der anhängenden Zeichnung erläutert. Es zeigen:
- Figur 1: in vergrößerter schematisierter Darstellung einen Schnitt durch eine erste Ausführungsform eines mehrschichtigen atmungsaktiven Kunstleders gemäß der Erfindung,
- Figur 2: einen Schnitt durch eine weitere Ausführungsform eines erfindungsgemäßen mehrschichtigen atmungsaktiven Kunstleders,
- Figur 3: in schematisierter Darstellung die Herstellung derartiger mehrschichtiger atmungsaktiver Kunstleder gemäß der Erfindung.

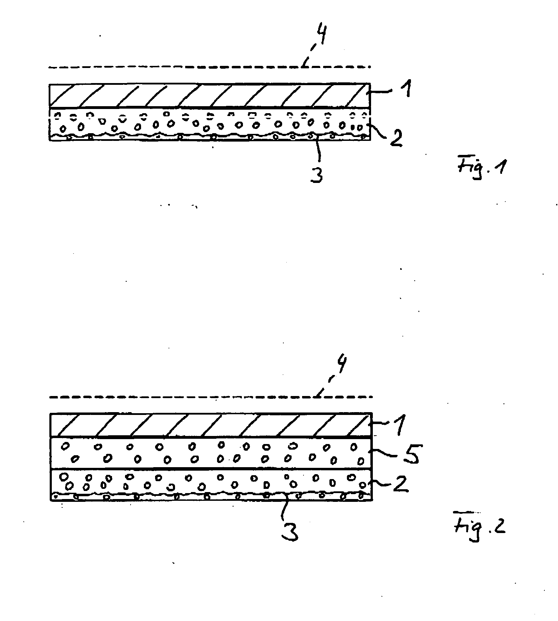

In der Figur 1 ist ein Querschnitt durch ein mehrschichtiges atmungsaktives Kunstleder dargestellt, welches ausgehend von seiner Ober- bzw. Sichtseite mit einer Deckschicht 1 auf Basis eines Polyurethans, hieran anschließend mit einer Zwischenschicht 2 aus einem offenzelligen Polyurethan-Schlagschaum und einer in die Zwischenschicht 2 eingebetteten Trägerschicht 3 aus einem textilen Flächengebilde ausgestattet ist.

Während das textile Flächengebilde 3 und die aus offenzelligem Polyurethan-Schlagschaum hergestellte Zwischenschicht 2 von sich aus offenporig und damit atmungsaktiv ausgebildet sind, wurde die Deckschicht in der nachfolgend noch geschilderten Weise aus einer wässrigen aliphatischen Polyurethandispersion durch schlagartige Trocknung derselben verfilmungsfrei auf einer Unterlage im so genannten Umkehrverfahren hergestellt, so dass diese Deckschicht ebenfalls porös mit Mikroporen eines Durchmessers von 10 bis 70 µm ausgerüstet ist, und somit der gesamte Verbund atmungsaktiv ist. Fakultativ kann anschließend die Oberseite der Deckschicht 1 noch mit einer Lackschicht 4 versehen werden und/oder der Verbund mit einer Oberflächenprofilierung, beispielsweise einer Prägung mit einer Ledernarbe versehen werden.

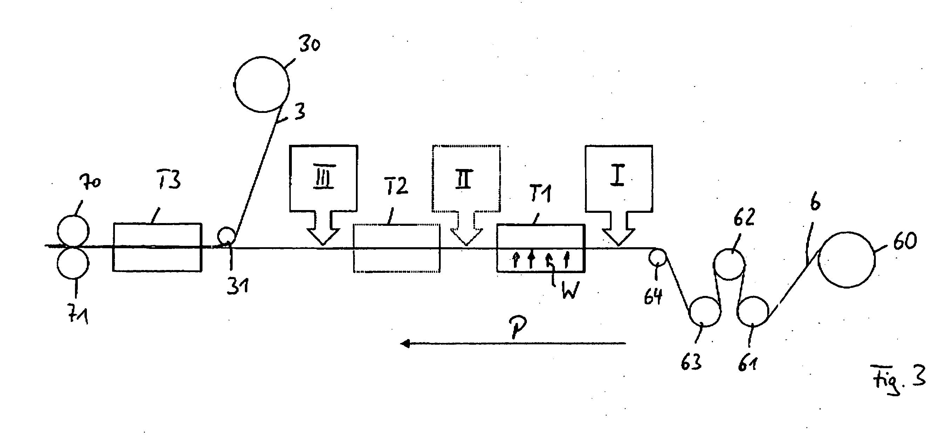

Die Herstellung eines derartigen mehrschichtigen atmungsaktiven Kunstleders ist schematisch in der Figur 3 dargestellt.

Wie bereits erwähnt, erfolgt diese Herstellung im so genannten Umkehrverfahren, d.h. es wird zunächst die spätere Deckschicht 1, danach die Zwischenschicht 2 und schließlich die spätere untere Trägerschicht 3 erzeugt bzw. aufgebracht, und zwar auf einer von der späteren Deckschicht 1 ablösbaren Unterlage 6.

In der Figur 3 ist die Produktionsrichtung mit Pfeil P gekennzeichnet.

Zunächst läuft von einer Vorratsrolle 60 ein geeignetes Substrat als Unterlage 6 der dargestellten Anlage zu, wobei diese Unterlage 6 beispielsweise von einem silikonisierten Papier gebildet sein kann und wahlweise glatt oder bereits mit einer Prägung, z.B. einer Ledernarbe versehen sein kann.

Die Unterlage 6 durchläuft zunächst mehrere Walzen 61, 62, 63, die beheizt sind, so dass die Unterlage bei Führung über die Zuführwalze 64 auf eine Oberflächentemperatur von vorzugsweise 175 bis 200°C erwärmt ist.

An einer mit I gekennzeichneten ersten Auftragsstation wird eine wässrige aliphatische Polyurethandispersion zur Ausbildung der Deckschicht in flüssiger Form auf die solchermaßen erhitzte Unterlage 6 mittels Spritzdüsen in feinstverteilter Tropfenform aufgesprüht, wobei aufgrund der zuvor erfolgten Erhitzung der Unterlage 6 eine schlagartige Verdampfung des Wassergehaltes der wässrigen Polyurethandispersion und/oder ggf. weiterer enthaltener Lösungsmittel erfolgt und die aufgebrachte Polyurethandispersion in einer Zeit von weniger als 5 s verfilmungsfrei trocknet.

Neben der Wärmezufuhr durch die erhitzte Unterlage 6 kann unterstützend in einer ersten Trocknungskammer T1 eine Wärmezufuhr beispielsweise infolge von Wärmestrahlung W erfolgen, dies jedoch von der Unterseite der Unterlage 6 her, um die Verdampfung des Wassergehaltes und eventuell enthaltener Lösungsmittel in der Polyurethandispersion nicht zu behindern.

Infolge dieser schlagartigen und in kürzester Zeit erfolgenden Trocknung werden die einzelnen aufgesprühten Tropfen der wässrigen Polyurethandispersion an einem Verlaufen und Ineinanderlaufen gehindert, so dass einer Verfilmung der sich aus der aufgesprühten Polyurethandispersion bildenden Deckschicht 1 zuverlässig entgegengewirkt wird und somit die am Ausgang der Trocknungskammer T1 gebildete Deckschicht 1 mit Mikroporen versehen ist, die eine Porengröße von z.B. 10 bis 70 µm oder mehr aufweisen.

Die solchermaßen erzeugte Deckschicht weist bevorzugt eine Dicke von 20 bis 100 µm und eine Trockenauflage von 30 bis 40 g/m² auf.

Auf die solchermaßen auf der Unterlage 6 ausgebildete mikroporöse Deckschicht 1 wird sodann in einer Bearbeitungsstation III ein zuvor in an sich bekannter Weise bereiteter Polyurethan-Schlagschaum aufgerakelt, der ein Schaumgewicht von 200 bis 700 g/l, vorzugsweise 300 bis 600 g/l, weiter bevorzugt 400 bis 500 g/l aufweist und in einer Dicke von 200 bis 1000 µm auf die Deckschicht aufgerakelt wird.

In den noch nicht vollständig getrockneten Polyurefihan-Schlagschaum zur Ausbildung der Zwischenschicht 2 wird sodann von einer Vorratsrolle 30 die Trägerschicht 3 in Gestalt eines geeigneten textilen Flächengebildes über eine Umlenkrolle 31 zugeführt und aufgelegt, wobei die Trägerschicht 3 infolge der noch nicht vollständigen Trocknung der Zwischenschicht 2 zumindest teilweise in die Zwischenschicht 2 einsinkt und in dieser eingebettet wird, wie aus Figur 1 ersichtlich. Sodann durchläuft der Verbund eine weitere Trocknungskammer T3 und wird zwischen Abzugswalzen 70, 71 abgezogen und einer weiteren Verarbeitung zugeführt.

Diese weitere Verarbeitung umfasst insbesondere das Abziehen der Unterlage 6 von der Deckschicht 1, so dass die Sichtseite der Deckschicht 1 und Oberseite des erstellten mehrschichtigen atmungsaktiven Kunstleders freigelegt wird.

Nach diesem Abziehen der Unterlage 6 kann sodann die oberseitige Oberfläche der Deckschicht 1 wahlweise mit einer Lackschicht 4 versehen werden und/oder mit einer Prägung zur Erzeugung einer Ledernarbe oder dergleichen versehen werden.

In einem alternativen Ausführungsbeispiel gemäß Figur 2, in welchem gleiche Elemente gleiche Bezugsziffern erhalten haben, umfasst das atmungsaktive Kunstleder nicht nur eine Zwischenschicht 2, sondern auch eine weitere Zwischenschicht 5, die zusätzlich zwischen der Deckschicht 1 und der Zwischenschicht 2 vorgesehen ist.

Wie aus der Figur 3 ersichtlich, wird zunächst diese weitere Zwischenschicht 5 nach der Herstellung der Deckschicht 1 auf der Unterlage 6 in einer wahlweise vorgesehenen weiteren Bearbeitungsstation II erstellt, wobei auch diese Zwischenschicht 5 durch Aufrakeln eines offenporigen Polyurethan-Schlagschaumes mit anschließender Trocknung in einer zugehörigen Trockenkammer T2 erstellt wird.

An die Erstellung dieser Zwischenschicht 5 schließt sich sodann die bereits beschriebene Aufbringung der Zwischenschicht 2 in der Bearbeitungsstation III und nachfolgend die Aufbringung der Trägerschicht 3 in der bereits geschilderten Weise an, sowie die weitere Verarbeitung des erstellten mehrschichtigen atmungsaktiven Kunstleders.

### Ausführungsbeispiel:

In einem Ausführungsbeispiel wurde eine wässrige aliphatische Polyurethandispersion zur Ausbildung der Deckschicht 1 aus einer Hartkomponente in Form einer anionischen aliphatischen Polyesterpolyurethan-Dispersion mit einem Feststoffgehalt von ca. 40% mit einer anionischen aliphatischen Polyesterpolyetherpolyurethan-Dispersion als Weichkomponente mit einem Feststoffgehalt von ca. 40% in einem Verhältnis von etwa 80:20 Gewichtsteilen gemischt, die zusätzlich 10 Gewichtsteile Aluminiumhydroxid als Flammschutz, 35 Gewichtsteile Wasser sowie 5 Gewichtsteile Ethanol als Lösungsmittel sowie 5 Gewichtsteile einer Pigmentdispersion enthielt und auf ein glattes Trennpapier bei einer Oberflächentemperatur desselben von 176° C im HVLP-Verfahren mit einer Düse von 0,8 mm Durchmesser bei einem Materialdruck von 0,6 bar und einem Zerstäuberdruck im verwendeten Flachstrahlkopf von 1,5 bar aufgespritzt.

Nach der verfilmungsfreien Trocknung dieser erstellten Deckschicht in einer Dicke von 33 µm auf der Unterlage wurde eine Schlagschaumrezeptur, bestehend aus einer aliphatischen wässrigen Polyurethandispersion mit Hart- und Weichkomponenten in einem Verhältnis von 80:20 Weichkomponente zu Hartkomponente, 28 Gewichtsteilen Aluminiumhydroxid als Flammschutzmiftel, Hilfsstoffen in Gestalt von 4,5 Gewichtsteilen wässrigen Amoniumstearat sowie 3 Gewichtsteilen wässrigem Fettalkoholsulfat, 0,8 Gewichtsteilen Acrylatverdicker sowie 0,2 Gewichtsteilen Ammoniak und 5 Gewichtsteilen Pigmentdispersion auf ein Schaumgewicht von 500 g/l aufgeschäumt und über ein Messerrakel in einer Nassfilmdicke von 400 µm auf die erstellte Deckschicht 1 aufgetragen. Nach Trocknung verbleibt noch eine Schaumdicke von ca. 250 µm.

In die noch nasse Zwischenschicht wurde sodann ein Baumwoll/Polyester-Trikot einkaschiert und nach der Durchtrocknung des Gesamtaufbaus dieser vom Trennpapier abgezogen.

Der Verbund wurde lackiert, wie für die Anwendung im Kfz-Innenraum und im Vakuumprägeverfahren mit der gewünschten Narbstruktur versehen.

Der erzielte Verbund wies eine Luftdurchlässigkeit von 5,25 l/dm²/min bei einem Prüfdruck von 200 Pa auf, wobei in der Deckschicht Poren mit einem durchschnittlichen Durchmesser von etwa 60 µm ausgebildet worden sind.

Das erstellte atmungsaktive Kunstleder erfüllt die einschlägigen Anforderungen für-den Kft-Innenbereich und bietet beispielsweise bei Anwendung als Sitzbezug durch seine Atmungsaktivität einen besonderen Sitzkomfort.

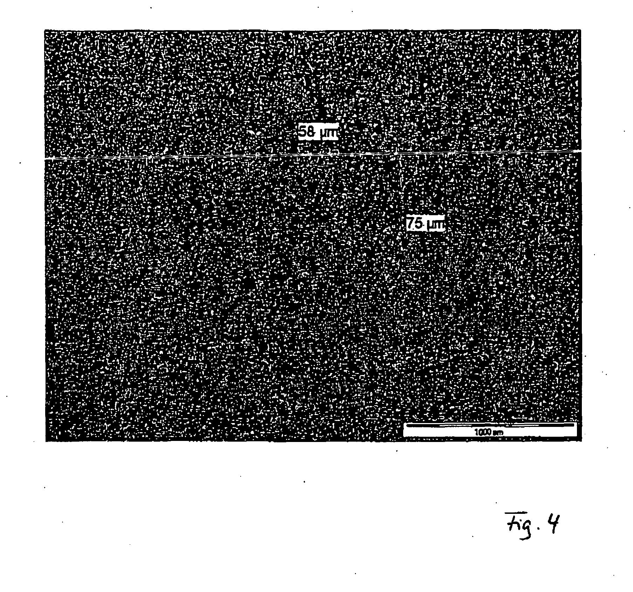

In der Figur 4 ist eine stark vergrößerte Mikroskopaufnahme einer im vorbeschriebenen Sinne durch schlagartige Trocknung hergestellten Deckschicht dargestellt. Man erkennt die verfilmungsfreie Aneinanderreihung einzelner Tropfen der eingesetzten wässrigen Polyurethandispersion, zwischen denen Mikroporen ausgebildet sind. Die vermessenen Beispielporen weisen Durchmesser von 58 bzw. 75 µm auf.

## Patentansprüche

1. Verfahren zur Herstellung eines atmungsaktiven mehrschichtigen Kunstleders mit einer Trägerschicht (3) aus einem textilen Flächengebilde, mindestens einer auf die Trägerschicht (3) aufgebrachten Zwischenschicht (2, 5) auf Basis eines zumindest teilweise offenzelligen Polyurethan-Schlagschaumes sowie einer auf die mindestens eine Zwischenschicht (2, 5) aufgebrachten Deckschicht (1) auf Basis eines Polyurethans, wobei in einem ersten Schritt die Deckschicht (1) auf eine ablösbare Unterlage (6) aufgebracht und verfestigt wird, nachfolgend die mindestens eine Zwischenschicht (2, 5) auf die Deckschicht (1) aufgebracht und anschließend die Trägerschicht (3) auf die mindestens eine Zwischenschicht (2, 5) aufgelegt wird und die Unterlage (6) von der Deckschicht (1) gelöst wird, **dadurch gekennzeichnet, dass** zur Ausbildung der Deckschicht (1) eine wässrige aliphatische Polyurethandispersion in flüssiger Form auf die Unterlage (6) aufgebracht wird und unmittelbar nach dem Aufbringen der Polyurethandispersion der Wassergehalt derselben durch Wärmezufuhr binnen einem Zeitintervall von weniger als 5 s verdampft wird, so dass eine verfilmungsfreie Trocknung der Polyurethandispersion auf der Unterlage (6) unter Ausbildung der Deckschicht (1) mit Mikroporen bewirkt wird.

2. Verfahren nach Anspruch 1, **dadurch gekennzeichnet, dass** Mikroporen mit einem Durchmesser von 10 bis 70 µm in der Deckschicht (1) erzeugt werden.

3. Verfahren nach Anspruch 1 oder 2, **dadurch gekennzeichnet, dass** zur Ausbildung der Deckschicht eine Polyurethandispersion mit einem Feststoffgehalt von 30 bis 60 % verwendet wird.

4. Verfahren nach einem der Ansprüche 1 bis 3, **dadurch gekennzeichnet, dass** die Polyurethandispersion zur Ausbildung der Deckschicht (1) mittels Spritzdüsen in Tropfenform auf die Unterlage (6) aufgesprüht wird.

5. Verfahren nach einem der Ansprüche 1 bis 3, **dadurch gekennzeichnet, dass** die Polyurethandispersion zur Ausbildung der Deckschicht (1) auf die Unterlage (6) aufgerakelt wird.

6. Verfahren nach einem der Ansprüche 1 bis 3, **dadurch gekennzeichnet, dass** die Polyurethandispersion zur Ausbildung der Deckschicht (1) auf die Unterlage (6) aufgedruckt wird.

7. Verfahren nach Anspruch 6, **dadurch gekennzeichnet, dass** der Auftrag der Polyurethandispersion auf die Unterlage (6) mittels Raster-, Sieb- oder RGW-Druckverfahren erfolgt.

8. Verfahren nach einem der Ansprüche 1 bis 7, **dadurch gekennzeichnet, dass** die Unterlage (6) bandförmig und endlos umlaufend ausgebildet ist und über mindestens eine beheizte Walze geführt wird, um die Unterlage (6) auf eine für die Verdampfung des Wassergehaltes der Polyurethandispersion geeignete Temperatur zu erwärmen.

9. Verfahren nach einem der Ansprüche 1 bis 8, **dadurch gekennzeichnet, dass** die auf die Unterlage (6) aufgebrachte Polyurethandispersion mittels Wärmestrahlung und/oder Mikrowellen zur Verdampfung des Wassergehaltes erhitzt wird.

10. Verfahren nach einem der Ansprüche 1 bis 9, **dadurch gekennzeichnet, dass** die Wärmezufuhr von der Unterlage (6) her erfolgt.

11. Verfahren nach einem der Ansprüche 1 bis 10, **dadurch gekennzeichnet, dass** die Deckschicht (1) in einer Dicke von 5 bis 150 µm, vorzugsweise 30 bis 100 µm auf die Unterlage (6) aufgebracht wird.

12. Verfahren nach einem der Ansprüche 1 bis 11, **dadurch gekennzeichnet, dass** die Deckschicht in einer Trockenauflage von 10 bis 50 g/m², vorzugsweise 30 bis 40 g/m² auf die Unterlage (6) aufgebracht wird.

13. Verfahren nach einem der Ansprüche 1 bis 12, **dadurch gekennzeichnet, dass** als Unterlage (6) eine Kunststofffolie, ein silikonisiertes textiles Flächengebilde oder silikonisiertes Papier oder ein metallisches Substrat oder ein mit PTFE beschichtetes Gewebe verwendet wird.

14. Verfahren nach einem der Ansprüche 1 bis 13, **dadurch gekennzeichnet, dass** die Unterlage (6) auf ihrer der Deckschicht (1) zugewandten Seite mit einer Oberflächenprofilierung versehen ist.

15. Verfahren nach einem der Ansprüche 1 bis 14, **dadurch gekennzeichnet, dass** die Polyurethandispersion zur Ausbildung der Deckschicht (1) wassermischbare niedrigsiedende organische Lösungsmittel enthält.

16. Verfahren nach einem der Ansprüche 1 bis 15, **dadurch gekennzeichnet, dass** die mindestens eine Zwischenschicht (2, 5) auf die Deckschicht (1) bzw. die zuvor aufgebrachte Zwischenschicht (5) aufgerakelt wird.

17. Verfahren nach einem der Ansprüche 1 bis 16, **dadurch gekennzeichnet, dass** eine Zwischenschicht (2) verwendet wird und die Zwischenschicht (2) ein Schaumgewicht von 200 bis 700 g/l, vorzugsweise 300 bis 600 g/l, weiter bevorzugt 400 bis 500 g/l aufweist und in einer Dicke von 200 bis 1000 µm auf die Deckschicht (1) aufgerakelt wird.

18. Verfahren nach einem der Ansprüche 1 bis 16, **dadurch gekennzeichnet, dass** zwei Zwischenschichten (2, 5) aufeinander folgend in einer Dicke von jeweils 200 bis 800 µm auf die Deckschicht (1) bzw. die Zwischenschicht (5) aufgerakelt werden.

19. Verfahren nach Anspruch 18, **dadurch gekennzeichnet, dass** die auf die Deckschicht aufgerakelte erste Zwischenschicht (5) ein Schaumgewicht von 300 bis 700 g/l, vorzugsweise 400 bis 600 g/l und die zweite Zwischenschicht (2) ein Schaumgewicht von 200 bis 600 g/l, vorzugsweise 300 bis 500 g/l aufweist.

20. Verfahren nach einem der Ansprüche 1 bis 19, **dadurch gekennzeichnet, dass** Zwischenschichten (2, 5) mit einer durchschnittlichen Porengröße von 100 bis 200 µm erzeugt werden.

21. Verfahren nach einem der Ansprüche 1 bis 20, **dadurch gekennzeichnet, dass** die mindestens eine Zwischenschicht (2, 5) und/oder die Deckschicht (1) durch Zusatz von Isocyanat oder Melamin vernetzt wird.

22. Verfahren nach einem der Ansprüche 1 bis 21, **dadurch gekennzeichnet, dass** auf die Deckschicht (1) auf ihrer der mindestens einen Zwischenschicht (2, 5) abgewandten Seite nach dem Ablösen der Unterlage (6) eine Lackschicht (4) aufgebracht wird.

23. Verfahren nach einem der Ansprüche 1 bis 22, **dadurch gekennzeichnet, dass** die Oberfläche der Deckschicht (1) nach dem Ablösen der Unterlage (6) geprägt wird.

24. Verfahren nach Anspruch 23, **dadurch gekennzeichnet, dass** die Oberfläche der Deckschicht (1) mittels Vakuumprägen geprägt wird:

25. Verfahren nach einem der Ansprüche 23 oder 24, **dadurch gekennzeichnet, dass** ein scharfkantiges Prägeprofil verwendet wird.

26. Verfahren nach einem der Ansprüche 1 bis 25, **dadurch gekennzeichnet, dass** als Trägerschicht (3) ein Gelege, Gewebe, Gewirke, Vlies oder Kombinationen derselben mit oder ohne Imprägnierung verwendet wird.

27. Verfahren nach einem der Ansprüche 1 bis 26, **dadurch gekennzeichnet, dass** die Trägerschicht (3) auf die noch nicht vollständig abgetrocknete Zwischenschicht (2) aufgelegt wird, so dass die Trägerschicht (3) zumindest teilweise in die Zwischenschicht (2) einsinkt.

28. Mehrschichtiges atmungsaktives Kunstleder mit einer Trägerschicht (3) aus einem textilen Flächengebilde, mindestens einer auf die Trägerschicht (3) aufgebrachten Zwischenschicht (2, 5) auf Basis eines zumindest teilweise offenzelligen Polyurethan-Schlagschaumes sowie einer auf die mindestens eine Zwischenschicht (2, 5) aufgebrachten Deckschicht (1) auf Basis eines Polyurethans, **dadurch gekennzeichnet, dass** die Deckschicht (1) aus einer verfilmungsfrei getrockneten wässrigen aliphatischen Polyurethandispersion mit Mikroporen ausgebildet ist.

29. Mehrschichtiges atmungsaktives Kunstleder nach Anspruch 28, **dadurch gekennzeichnet, dass** die Deckschicht (1) mit Mikroporen eines Porendurchmessers von 10 bis 70 µm ausgebildet ist.

30. Mehrschichtiges atmungsaktives Kunstleder nach Anspruch 28 oder 29, **dadurch gekennzeichnet, dass** die Deckschicht (1) eine Dicke von 5 bis 150 µm aufweist.

31. Mehrschichtiges atmungsaktives Kunstleder nach einem der Ansprüche 28 bis 30, **dadurch gekennzeichnet, dass** die Deckschicht eine Trockenauflage von 10 bis 50 g/m², vorzugsweise 30 bis 40 g/m² aufweist.

32. Mehrschichtiges atmungsaktives Kunstleder nach einem der Ansprüche 28 bis 31, **dadurch gekennzeichnet, dass** eine Zwischenschicht (2) vorgesehen ist und die Zwischenschicht (2) ein Schaumgewicht von 200 bis 700 g/l, vorzugsweise 300 bis 600 g/l, weiter bevorzugt 400 bis 500 g/l und eine Dicke von 200 bis 1000 µm aufweist.

33. Mehrschichtiges atmungsaktives Kunstleder nach einem der Ansprüche 28 bis 31, **dadurch gekennzeichnet, dass** zwei Zwischenschichten (2, 5) aufeinander folgend in einer Dicke von 200 bis 800 µm auf der Deckschicht (1) bzw. der Zwischenschicht (5) aufliegend vorgesehen sind.

34. Mehrschichtiges atmungsaktives Kunstleder nach Anspruch 33, **dadurch gekennzeichnet, dass** die auf die Deckschicht aufgebrachte erste Zwischenschicht (5) ein Schaumgewicht von 300 bis 700 g/l, vorzugsweise 400 bis 600 g/l und die zweite Zwischenschicht (2) ein Schaumgewicht von 200 bis 600 g/l, vorzugsweise 300 bis 500 g/l aufweist.

35. Mehrschichtiges atmungsaktives Kunstleder nach einem der Ansprüche 28 bis 34, **dadurch gekennzeichnet, dass** die Zwischenschichten (2, 5) eine durchschnittliche Porengröße von 100 bis 200 µm aufweisen.

36. Mehrschichtiges atmungsaktives Kunstleder nach einem der Ansprüche 28 bis 35, **dadurch gekennzeichnet, dass** die mindestens eine Zwischenschicht (2, 5) und/oder Deckschicht (1) durch Zusatz von Isocyanat oder Melamin vernetzt ist und/oder funktionale Füllstoffe enthält.

37. Mehrschichtiges atmungsaktives Kunstleder nach einem der Ansprüche 28 bis 36, **dadurch gekennzeichnet, dass** auf die Deckschicht (1) auf ihrer der mindestens einen Zwischenschicht (2, 5) abgewandten Seite eine Lackschicht (4) aufgebracht ist.

38. Mehrschichtiges atmungsaktives Kunstleder nach einem der Ansprüche 28 bis 37, **dadurch gekennzeichnet, dass** die Oberfläche der Deckschicht (1) geprägt ist.

39. Mehrschichtiges atmungsaktives Kunstleder nach Anspruch 38, **dadurch gekennzeichnet, dass** ein scharfkantiges Prägeprofil verwendet ist.

40. Mehrschichtiges atmungsaktives Kunstleder nach einem der Ansprüche 28 bis 39, **dadurch gekennzeichnet, dass** als Trägerschicht (3) ein Gelege, Gewebe, Gewirke, Vlies oder Kombinationen derselben mit oder ohne Polyurethanimprägnierung verwendet ist.

41. Mehrschichtiges atmungsaktives Kunstleder nach einem der Ansprüche 28 bis 40, **dadurch gekennzeichnet, dass** die Trägerschicht (3) zumindest teilweise in die Zwischenschicht (2) eingebettet ist.

## Claims

1. Method for producing a breathable multi-layer synthetic leather with a backing layer (3) made of a textile fabric, at least one intermediate layer (2, 5) applied to the backing layer (3) and based on an at least partially open-cell whipped polyurethane foam, as well as an outer layer (1) applied to the at least one intermediate layer (2, 5) and based on a polyurethane, wherein in a first step, the outer layer (1) is applied to a detachable underlay (6) and is hardened, the at least one intermediate layer (2, 5) is then applied to the outer layer (1) and the backing layer is then placed on the at least one intermediate layer (2, 5) and the underlay (6) is released from the outer layer (1), **characterised in that**, to form the outer layer (1), an aqueous aliphatic polyurethane dispersion in liquid form is applied to the underlay (6) and immediately after the application of the polyurethane dispersion, the water content thereof is evaporated by the supply of heat within a time interval of less than 5 s, so that a film-free drying of the polyurethane dispersion on the underlay (6) is brought about with the formation of the outer layer (1) with micropores.

2. Method according to claim 1, **characterised in that** micropores with a diameter of 10 to 70 µm are produced in the outer layer (1).

3. Method according to claim 1 or 2, **characterised in that** a polyurethane dispersion with a solid content of 30 to 60% is used to form the outer layer.

4. Method according to any one of claims 1 to 3, **characterised in that** the polyurethane dispersion is sprayed onto the underlay (6) in drop form by means of spray nozzles to form the outer layer (1).

5. Method according to any one of claims 1 to 3, **characterised in that** the polyurethane dispersion is applied by doctor blade onto the underlay (6) to form the outer layer (1).

6. Method according to any one of claims 1 to 3, **characterised in that** the polyurethane dispersion is imprinted onto the underlay (6) to form the outer layer (1).

7. Method according to claim 6, **characterised in that** the polyurethane dispersion is applied to the underlay (6) by means of half-tone, screen or RGW printing methods.

8. Method according to any one of claims 1 to 7, **characterised in that** the underlay (6) is band-shaped and endlessly circulating, and is guided over at least one heated roller in order to heat the underlay (6) to a temperature suitable to evaporate the water content of the polyurethane dispersion.

9. Method according to any one of claims 1 to 8, **characterised in that** the polyurethane dispersion applied to the underlay (6) is heated by means of heat radiation and/or microwaves to evaporate the water content.

10. Method according to any one of claims 1 to 9, **characterised in that** the heat supply takes place from the underlay (6).

11. Method according to any one of claims 1 to 10, **characterised in that** the outer layer (1) is applied in a thickness of 5 to 150 µm, preferably 30 to 100 µm, to the underlay (6).

12. Method according to any one of claims 1 to 11, **characterised in that** the outer layer is applied in a dry coating of 10 to 50 g/m², preferably 30 to 40 g/m² to the underlay (6).

13. Method according to any one of claims 1 to 12, **characterised in that** a plastics material film, a siliconised textile fabric or siliconised paper or a metallic substrate or a woven fabric coated with PTFE is used as the underlay (6).

14. Method according to any one of claims 1 to 13, **characterised in that** the underlay (6) is provided with a surface profiling on its side facing the outer layer (1).

15. Method according to any one of claims 1 to 14, **characterised in that** the polyurethane dispersion contains water-mixable low-boiling organic solvents to form the outer layer (1).

16. Method according to any one of claims 1 to 15, **characterised in that** the at least one intermediate layer (2, 5) is applied by doctor blade to the outer layer (1) or the previously applied intermediate layer (5).

17. Method according to any one of claims 1 to 16, **characterised in that** an intermediate layer (2) is used and the intermediate layer (2) has a foamed weight of 200 to 700 g/l, preferably 300 to 600 g/l, more preferably 400 to 500 g/l and is applied by doctor blade in a thickness of 200 to 1,000 µm to the outer layer (1).

18. Method according to any one of claims 1 to 16, **characterised in that** two intermediate layers (2, 5) are applied consecutively by doctor blade in a thickness of, in each case, 200 to 800 µm to the outer layer (1) or the intermediate layer (5).

19. Method according to claim 18, **characterised in that** the first intermediate layer (5) applied by doctor blade to the outer layer has a foamed weight of 300 to 700 g/l, preferably 400 to 600 g/l and the second intermediate layer (2) has a foamed weight of 200 to 600 g/l, preferably 300 to 500 g/l.

20. Method according to any one of claims 1 to 19, **characterised in that** the intermediate layers (2, 5) with an average pore size of 100 to 200 µm are produced.

21. Method according to any one of claims 1 to 20, **characterised in that** the at least one intermediate layer (2, 5) and/or the outer layer (1) is cross-linked by the addition of isocyanate or melamine.

22. Method according to any one of claims 1 to 21, **characterised in that** a lacquer layer (4) is applied to the outer layer (1) on its side remote from the at least one intermediate layer (2, 5), after the detachment of the underlay (6).

23. Method according to any one of claims 1 to 22, **characterised in that** the surface of the outer layer (1) is embossed after the detachment of the underlay (6).

24. Method according to claim 23, **characterised in that** the surface of the outer layer (1) is embossed by means of vacuum embossing.

25. Method according to either of claims 23 or 24, **characterised in that** a sharp-edged embossing profile is used.

26. Method according to any one of claims 1 to 25, **characterised in that** an interlaid scrim, woven fabric, knitted fabric, nonwoven or combinations thereof with or without impregnation is used as the backing layer (3).

27. Method according to any one of claims 1 to 26, **characterised in that** the backing layer (3) is placed on the not yet fully dried intermediate layer (2), so the backing layer (3) at least partially sinks into the intermediate layer (2).

28. Multi-layer breathable synthetic leather with a backing layer (3) made of a textile fabric, at least one intermediate layer (2, 5) applied to the backing layer (3) and based on an at least partially open-cell whipped polyurethane foam, and an outer layer (1) applied to the at least one intermediate layer (2, 5) and based on a polyurethane, **characterised in that** the outer layer (1) is formed from an aqueous aliphatic polyurethane dispersion with micropores dried in a film-free manner.

29. Multi-layer breathable synthetic leather according to claim 28, **characterised in that** the outer layer (1) is formed with micropores with a pore diameter of 10 to 70 µm.

30. Multi-layer breathable synthetic leather according to claim 28 or 29, **characterised in that** the outer layer (1) has a thickness of 5 to 150 µm.

31. Multi-layer breathable synthetic leather according to any one of claims 28 to 30, **characterised in that** the outer layer has a dry coating of 10 to 50 g/m², preferably 30 to 40 g/m².

32. Multi-layer breathable synthetic leather according to any one of claims 28 to 31, **characterised in that** an intermediate layer (2) is provided and the intermediate layer (2) has a foamed weight of 200 to 700 g/l, preferably 300 to 600 g/I, more preferably 400 to 500 g/l and a thickness of 200 to 1,000 µm.

33. Multi-layer breathable synthetic leather according to any one of claims 28 to 31, **characterised in that** two intermediate layers (2, 5) are provided successively in a thickness of 200 to 800 µm lying on the outer layer (1) or the intermediate layer (5).

34. Multi-layer breathable synthetic leather according to claim 33, **characterised in that** the first intermediate layer (5) applied to the outer layer has a foamed weight of 300 to 700 g/l, preferably 400 to 600 g/l and the second intermediate layer (2) has a foamed weight of 200 to 600 g/l, preferably 300 to 500 g/l.

35. Multi-layer breathable synthetic leather according to any one of claims 28 to 34, **characterised in that** the intermediate layers (2, 5) have an average pore size of 100 to 200 µm.

36. Multi-layer breathable synthetic leather according to any one of claims 28 to 35, **characterised in that** the at least one intermediate layer (2, 5) and/or outer layer (1) is cross-linked by the addition of isocyanate or melamine and/or contains functional fillers.

37. Multi-layer breathable synthetic leather according to any one of claims 28 to 36, **characterised in that** a lacquer layer (4) is applied to the outer layer (1) on its side remote from the at least one intermediate layer (2, 5).

38. Multi-layer breathable synthetic leather according to any one of claims 28 to 37, **characterised in that** the surface of the outer layer (1) is embossed.

39. Multi-layer breathable synthetic leather according to claim 38, **characterised in that** a sharp-edged embossing profile is used.

40. Multi-layer breathable synthetic leather according to any one of claims 28 to 39, **characterised in that** an interlaid scrim, woven fabric, knitted fabric, nonwoven or combinations thereof with or without polyurethane impregnation is used as the backing layer (3).

41. Multi-layer breathable synthetic leather according to any one of claims 28 to 40, **characterised in that** the backing layer (3) is at least partially embedded in the intermediate layer (2).

## Revendications

1. Procédé pour la fabrication d'un similicuir respirant à plusieurs couches, avec un substrat (3) constitué d'un matériau textile en nappe, au moins une couche intermédiaire (2, 5) à base de mousse de polyuréthane à pores au moins partiellement ouverts, appliquée sur le substrat (3), et avec une couche de finition (1) à base de polyuréthane, appliquée sur au moins la couche intermédiaire (2, 5), dans lequel la couche de finition (1) est appliquée et fixée sur un support amovible (6) au cours d'une première étape, puis au moins la couche intermédiaire (2, 5) est appliquée sur la couche de finition (1), et le substrat (3) est ensuite posé sur au moins la couche intermédiaire (2, 5), et le support (6) est détaché de la couche de finition (1), **caractérisé en ce que**, pour la réalisation de la couche de finition (1), une dispersion de polyuréthane aliphatique aqueuse est appliquée sous forme liquide sur le support (6), et la part d'eau dans la dispersion de polyuréthane est évaporée par apport de chaleur immédiatement après l'application de celle-ci, en une durée de moins de 5 s, de sorte qu'il en résulte un séchage sans formation de film de la dispersion de polyuréthane sur le support (6), formant ainsi la couche de finition (1) à micropores.

2. Procédé selon la revendication 1, **caractérisé en ce que** des micropores présentant un diamètre de 10 à 70 µm sont produits dans la couche de finition (1).

3. Procédé selon l'une des revendications 1 ou 2, **caractérisé en ce qu'**une dispersion de polyuréthane avec une teneur en matières solides de 30 à 60 % est utilisée pour réaliser la couche de finition.

4. Procédé selon l'une des revendications 1 à 3, **caractérisé en ce que** la dispersion de polyuréthane destinée à la réalisation de la couche de finition (1) est pulvérisée sous forme de gouttes sur le support (6) au moyen de gicleurs.

5. Procédé selon l'une des revendications 1 à 3, **caractérisé en ce que** la dispersion de polyuréthane destinée à la réalisation de la couche de finition (1) est appliquée par raclage sur le support (6).

6. Procédé selon l'une des revendications 1 à 3, **caractérisé en ce que** la dispersion de polyuréthane destinée à la réalisation de la couche de finition (1) est imprimée sur le support (6).

7. Procédé selon la revendication 6, **caractérisé en ce que** l'application de la dispersion de polyuréthane sur le support est effectuée au moyen d'un procédé de tramage, de tamisage ou d'impression RGV.

8. Procédé selon l'une des revendications 1 à 7, **caractérisé en ce que** le support (6) est conçu en forme de bande continue sans fin et est acheminé sur au moins un cylindre chauffé, permettant de chauffer le support (6) à une température adaptée pour l'évaporation de la part d'eau dans la dispersion de polyuréthane.

9. Procédé selon l'une des revendications 1 à 8, **caractérisé en ce que** la dispersion de polyuréthane appliquée sur le support (6) est chauffée par rayonnement thermique et/ou par micro-ondes pour l'évaporation de la part d'eau.

10. Procédé selon l'une des revendications 1 à 9, **caractérisé en ce que** l'alimentation en chaleur est effectuée à partir du support (6).

11. Procédé selon l'une des revendications 1 à 10, **caractérisé en ce que** la couche de finition (1) est appliquée en une épaisseur de 5 à 150 µm, de préférence de 30 à 100 µm sur le support (6).

12. Procédé selon l'une des revendications 1 à 11, **caractérisé en ce que** la couche de finition est appliquée sous la forme d'un revêtement à sec, à raison de 10 à 50 g/m², de préférence de 30 à 40 g/m² sur le support (6).

13. Procédé selon l'une des revendications 1 à 12, **caractérisé en ce que** le support (6) utilisé est un film plastique, un matériau textile en nappe siliconé ou un papier siliconé ou un substrat métallique ou un tissu revêtu de polytétrafluoréthylène (PTFE).

14. Procédé selon l'une des revendications 1 à 13, **caractérisé en ce que** le support (6) est pourvu d'un profilage de surface sur son côté tourné vers la couche de finition (1).

15. Procédé selon l'une des revendications 1 à 14, **caractérisé en ce que** la dispersion de polyuréthane destinée à la réalisation de la couche de finition (1) contient des solvants organiques, à bas point d'ébullition et hydrosolubles.

16. Procédé selon l'une des revendications 1 à 15, **caractérisé en ce que** au moins la couche intermédiaire (2, 5) est appliquée par raclage sur la couche de finition (1) ou sur la couche intermédiaire (5) appliquée précédemment.

17. Procédé selon l'une des revendications 1 à 16, **caractérisé en ce qu'**une couche intermédiaire (2) est utilisée, et **en ce que** la couche intermédiaire (2) présente un poids en mousse de 200 à 700 g/l, de préférence de 300 à 600 g/l, de façon davantage préférée, de 400 à 500 g/l, et est appliquée par raclage sur la couche de finition (1), en une épaisseur de 200 à 1000 µm.

18. Procédé selon l'une des revendications 1 à 16, **caractérisé en ce que** deux couches intermédiaires (2, 5) consécutives sont appliquées par raclage sur la couche de finition (1) ou sur la couche intermédiaire (5), respectivement, en une épaisseur de 200 à 800 µm.

19. Procédé selon la revendication 18, **caractérisé en ce que** la première couche intermédiaire (5) appliquée par raclage sur la couche de finition présente un poids en mousse de 300 à 700 g/l, de préférence de 400 à 600 g/l, et **en ce que** la deuxième couche intermédiaire (2) présente un poids en mousse de 200 à 600 g/l, de préférence de 300 à 500 g/l.

20. Procédé selon l'une des revendications 1 à 19, **caractérisé en ce que** les couches intermédiaires (2, 5) sont fabriquées avec une taille moyenne de pores de 100 à 200 µm.

21. Procédé selon l'une des revendications 1 à 20, **caractérisé en ce que** au moins la couche intermédiaire (2, 5) et/ou la couche de finition (1) est/sont réticulée(s) par ajout d'isocyanate ou de mélamine.

22. Procédé selon l'une des revendications 1 à 21, **caractérisé en ce qu'**après le retrait du support (6), une couche de laque (4) est appliquée sur la couche de finition (1), de son côté détourné d'au moins la couche intermédiaire (2, 5).

23. Procédé selon l'une des revendications 1 à 22, **caractérisé en ce que** la surface de la couche de finition (1) est gaufrée après le retrait du support (6).

24. Procédé selon la revendication 23, **caractérisé en ce que** la surface de la couche de finition (1) est gaufrée au moyen d'un gaufrage sous vide.

25. Procédé selon l'une des revendications 23 ou 24, **caractérisé en ce qu'**un profil de gaufrage à arêtes vives est utilisé.

26. Procédé selon l'une des revendications 1 à 25, **caractérisé en ce que** le substrat (3) utilisé est un tissu non tissé, un tissu, une étoffe, un voile ou encore une combinaison de ceux-ci, avec ou sans imprégnation.

27. Procédé selon l'une des revendications 1 à 26, **caractérisé en ce que** le substrat (3) est appliqué sur la couche intermédiaire (2) qui n'est pas encore tout à fait sèche, de sorte que le substrat (3) soit au moins partiellement enrobé dans la couche intermédiaire (2).

28. Similicuir respirant à plusieurs couches, avec un substrat (3) constitué d'un matériau textile en nappe, au moins une couche intermédiaire (2, 5) à base de mousse de polyuréthane à pores au moins partiellement ouverts, appliquée sur le substrat (3), et avec une couche de finition (1) à base de polyuréthane, appliquée sur au moins la couche intermédiaire (2, 5), **caractérisé en ce que** la couche de finition (1) constituée d'une dispersion de polyuréthane aliphatique aqueuse séchée sans former de film, comporte des micropores.

29. Similicuir respirant à plusieurs couches selon la revendication 28, **caractérisé en ce que** la couche de finition (1) est conçue avec des micropores présentant un diamètre de pore compris entre 10 et 70 µm.

30. Similicuir respirant à plusieurs couches selon la revendication 28 ou 29, **caractérisé en ce que** la couche de finition (1) présente une épaisseur comprise entre 5 et 150 µm.

31. Similicuir respirant à plusieurs couches selon l'une des revendications 28 à 30, **caractérisé en ce que** la couche de finition présente un revêtement à sec de 10 à 50 g/m², de préférence de 30 à 40 g/m².

32. Similicuir respirant à plusieurs couches selon l'une des revendications 28 à 31, **caractérisé en ce qu'**il est prévu une couche intermédiaire (2) et **en ce que** la couche intermédiaire (2) présente un poids en mousse de 200 à 700 g/l, de préférence de 300 à 600 g/l et de façon davantage préférée, de 400 à 500 g/l, avec une épaisseur de 200 à 1000 µm.

33. Similicuir respirant à plusieurs couches selon l'une des revendications 28 à 31, **caractérisé en ce que** deux couches intermédiaires (2, 5) consécutives sont appliquées sur la couche de finition (1) ou sur la couche intermédiaire (5), en une épaisseur de 200 à 800 µm.

34. Similicuir respirant à plusieurs couches selon la revendication 33, **caractérisé en ce que** la première couche intermédiaire (5) appliquée sur la couche de finition présente un poids en mousse de 300 à 700 g/l, de préférence de 400 à 600 g/l, et **en ce que** la deuxième couche de finition (2) présente un poids en mousse de 200 à 600 g/l, de préférence de 300 à 500 g/l.

35. Similicuir respirant à plusieurs couches selon l'une des revendications 28 à 34, **caractérisé en ce que** les couches intermédiaires (2, 5) présentent une taille moyenne de pores de 100 à 200 µm.

36. Similicuir respirant à plusieurs couches selon l'une des revendications 28 à 35, **caractérisé en ce que** au moins la couche intermédiaire (2, 5) et/ou la couche de finition (1) est/sont réticulée(s) par ajout d'isocyanate ou de mélamine et/ou contient/contiennent des matériaux de remplissage fonctionnels.

37. Similicuir respirant à plusieurs couches selon l'une des revendications 28 à 36, **caractérisé en ce qu'**une couche de laque (4) est appliquée sur la couche de finition (1), de son côté détourné d'au moins la couche intermédiaire (2, 5).

38. Similicuir respirant à plusieurs couches selon l'une des revendications 28 à 37, **caractérisé en ce que** la surface de la couche de finition (1) est gaufrée.

39. Similicuir respirant à plusieurs couches selon la revendication 38, **caractérisé en ce qu'**un profil de gaufrage à arêtes vives est utilisé.

40. Similicuir respirant à plusieurs couches selon l'une des revendications 28 à 39, **caractérisé en ce que** le substrat (3) utilisé est un tissu non tissé, un tissu, une étoffe, un voile ou encore une combinaison de ceux-ci, avec ou sans imprégnation de polyuréthane.

41. Similicuir respirant à plusieurs couches selon l'une des revendications 28 à 40, **caractérisé en ce que** le substrat (3) est au moins partiellement enrobé dans la couche intermédiaire (2).
